# EUROPEAN PATENT SPECIFICATION

(11) **EP 4 109 957 B1**
(45) Date of publication and mention of the grant of the patent: **09.04.2025**
(21) Application number: 21756484.8
(22) Date of filing: 20.02.2021
(51) Int. Cl.: H04W 36/00, H04W 24/10, H04L 5/00

(54) **TRANSMISSION METHOD AND DEVICE**
ÜBERTRAGUNGSVERFAHREN UND -VORRICHTUNG
PROCÉDÉ ET DISPOSITIF DE TRANSMISSION

(30) Priority: 21.02.2020 CN 202010108627
(43) Date of publication of application: 28.12.2022
(73) Proprietor: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: ZHANG, Xiaoran, Beijing 100032 (CN)
(74) Representative: J A Kemp LLP
(86) International application number: PCT/CN2021/077114
(87) International publication number: WO 2021/164773

(56) References cited:
- WO-A1-2020/027615
- CN-A- 106 304 128
- CN-A- 109 511 124
- MEDIATEK INC: "Inter-frequency measurement requirement without gap", vol. RAN WG4, no. Electronic Meeting; 20200224 - 20200306, 14 February 2020 (2020-02-14), XP051850474, Retrieved from the Internet <URL:https://ftp.3gpp.org/tsg_ran/WG4_Radio/TSGR4_94_e/Docs/R4-2000460.zip R4-2000460 inter wo gap.docx> [retrieved on 20200214]
- INTEL CORPORATION: "Status Report to TSG 1 Work plan related evaluation 2. Detailed progress in RAN WGs since last TSG meeting (for all involved WGs)", vol. TSG RAN, no. Sitges, Spain; 20191209 - 20191212, 2 December 2019 (2019-12-02), XP051834484, Retrieved from the Internet <URL:https://ftp.3gpp.org/tsg_ran/TSG_RAN/TSGR_86/Docs/RP-192881.zip RP-192881 WI Status report for R16 NR RRM enhancement.docx> [retrieved on 20191202]
- HUAWEI ET AL: "Discussion on CSI-RS based L3 measurement requirements and scheduling", vol. RAN WG4, no. Online; 20200224 - 20200306, 14 February 2020 (2020-02-14), XP051851548, Retrieved from the Internet <URL:https://ftp.3gpp.org/tsg_ran/WG4_Radio/TSGR4_94_e/Docs/R4-2001658.zip R4-2001658.doc> [retrieved on 20200214]
- INTEL CORPORATION: "Status Report to TSG 1 Work plan related evaluation 2. Detailed progress in RAN WGs since last TSG meeting (for all involved WGs)", 3GPP DRAFT; RP-192881, 3RD GENERATION PARTNERSHIP PROJECT (3GPP), vol. TSG RAN, 2 December 2019 (2019-12-02), XP051834484

## Description

### TECHNICAL FIELD

Embodiments of the present disclosure relate to the technical field of communications, and in particular to a transmission method and device.

### BACKGROUND

In the related art, a base station schedules a User Equipment (UE) for uplink transmission and downlink reception, and when the UE performs inter-frequency measurement, the base station configures the UE to use a measurement gap. The use of the measurement gap will cause the UE to be unable to perform the uplink transmission or the downlink reception within the measurement gap, which will limit the scheduling and transmission of the base station

All the inter-frequency measurements need to be configured with measurement gap. The UE cannot receive or send data within the measurement gap, resulting in resource waste and overhead. However, in actual deployment, the transmission position of reference signal (e.g., Synchronization Signal/PBCH Blocks (SSB) or Channel State Information-Reference Signals (CSI-RS)) used for measurement may be very flexible, and there are also scenarios where the inter-frequency measurement does not need a measurement gap, for example, when SSB center frequencies are different but are contained in an activated Bandwidth Part (BWP). In this case, for a capable UE, it does not need a measurement gap to perform the inter-frequency measurements, but there are actually some limitations on transmission.

For example, in a Time Division Duplexing (TDD) system, if the uplink transmission and downlink transmission of two overlapping or partially overlapping carriers conflict (uplink and downlink ratios are different), a very serious cross-slot interference will occur, and the system cannot work properly. For another example, for millimeter waves, the UE will use a beam for receiving and transmitting, and the beam can only be transmitted or received in the same direction at the same time.

Therefore, in the above scenarios, although the inter-frequency measurements do not need measurement gap, there are still some restrictions on transmission during the measurement. If the limitations are not taken into account, interference will occur, and the system cannot work properly.

Related technologies are discussed in 3GPP drafts R4-2000460, RP-192881, and R4-2001658.

### SUMMARY

The present invention is defined in the claims. One purpose of the embodiments of the present disclosure is to provide a transmission method and device to solve the problem of uplink and downlink interference caused by not configuring a measurement gap in inter-frequency measurement.

In the embodiments of the present disclosure, while the overhead is reduced, a loss in performance of the system caused by the uplink and downlink interference is avoided.

### BRIEF DESCRIPTION OF THE DRAWINGS

By reading the detailed description of optional implementation modes below, a variety of other advantages and benefits will become clear to those of ordinary skill in the art. The accompanying drawings are only intended to illustrate the purpose of the optional implementation modes and are not considered as a limitation on the present disclosure. In addition, the same reference signs are used to indicate the same parts throughout the accompanying drawings. In the accompanying drawings:
FIG. 1A is a schematic diagram of a wireless communication system to which the present disclosure is applied;
FIG. 1B is a schematic diagram of a baseband processor and a UE according to the present disclosure;
FIG. 2 is a flowchart of a transmission method according to the embodiments of the present disclosure;
FIG. 3 is a first schematic diagram illustrating that a serving cell performs inter-frequency neighbor cell measurement according to the present disclosure;
FIG. 4 is a schematic diagram illustrating that an SSB is transmitted in the time domain according to the present disclosure;
FIG. 5 is a schematic diagram of a symbol not receiving or transmitting data according to the present disclosure;
FIG. 6 is a second schematic diagram illustrating that a serving cell performs inter-frequency neighbor cell measurement according to the present disclosure;
FIG. 7 is a third schematic diagram illustrating that a serving cell performs inter-frequency neighbor cell measurement according to the present disclosure;
FIG. 8 is fourth schematic diagram illustrating that a serving cell performs inter-frequency neighbor cell measurement according to the present disclosure;
FIG. 9 is a fifth schematic diagram illustrating that a serving cell performs inter-frequency neighbor cell measurement according to the present disclosure;
FIG. 10 is a first schematic diagram of a UE according to the embodiments of the present disclosure;
FIG. 11 is a second schematic diagram of a UE according to the present disclosure; and
FIG. 12 is a third schematic diagram of a UE according to the present disclosure.

### DETAILED DESCRIPTION

The technical solutions in the embodiments of the present application will be described clearly and completely below in combination with the drawings in the present disclosure. It is apparent that the described embodiments are not all embodiments but part of embodiments of the disclosure. All other embodiments obtained by those of ordinary skill in the art based on the embodiments in the present disclosure without creative work shall fall within the scope of protection of the present disclosure.

In addition, term "include" and any variations thereof in the specification and the claims of the disclosure are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead. In addition, "and/or" used in the specification and the claims indicates at least one of the connected objects, for example, A and/or B indicates three cases, that is, individual A is included, individual B is included, and both A and B exist.

In the disclosure, the words like "exemplary" or "for example" are used to serve as example, example illustration or explanation. Any embodiments or designs described as "exemplary" or "for example" in the embodiments of the present disclosure shall not be construed as being preferred or superior to other embodiments or designs. More exactly, the purpose of using the word "exemplary" or "for example" is to present related concepts in a specific way.

The technologies described herein are not limited to a Long Term Evolution (LTE)/LTE-Advanced (LTE-A) system, and may also be applied to various wireless communication systems, for example, Code Division Multiple Access (CDMA), Time Division Multiple Access (TDMA), Frequency Division Multiple Access (FDMA), Orthogonal Frequency Division Multiple Access (OFDMA), Single-Carrier Frequency-Division Multiple Access (SC-FDMA), and other systems.

Terms "system" and "network" are usually used interchangeably. The CDMA system may implement radio technologies such as CDMA2000 and Universal Terrestrial Radio Access (UTRA). UTRA includes Wideband CDMA (WCDMA) and other CDMA variations. The TDMA system may implement radio technologies such as Global System for Mobile Communication (GSM). The OFDMA system may implement radio technologies such as Ultra Mobile Broadband (UMB), Evolution-UTRA (E-UTRA), Institute of Electrical and Electronics Engineers (IEEE) 802.11 (Wireless Fidelity (Wi-Fi)), IEEE 802.16 (World Interoperability for Microwave Access (WiMAX)), IEEE 802.20, and Flash-OFDM. UTRA and E-UTRA are part of Universal Mobile Telecommunications System (UMTS). LTE and more advanced LTE (such as LTE-A) are new UMTS releases using E-UTRA. UTRA, E-UTRA, UMTS, LTE, LTE-A and GSM are described in the documents from the organization named after "3rd Generation Partnership Project (3GPP)". CDMA2000 and UMB are described in the documents from the organization named after "3GPP2". The technologies described herein may be applied not only to the above-mentioned systems and radio technologies but also to other systems and radio technologies.

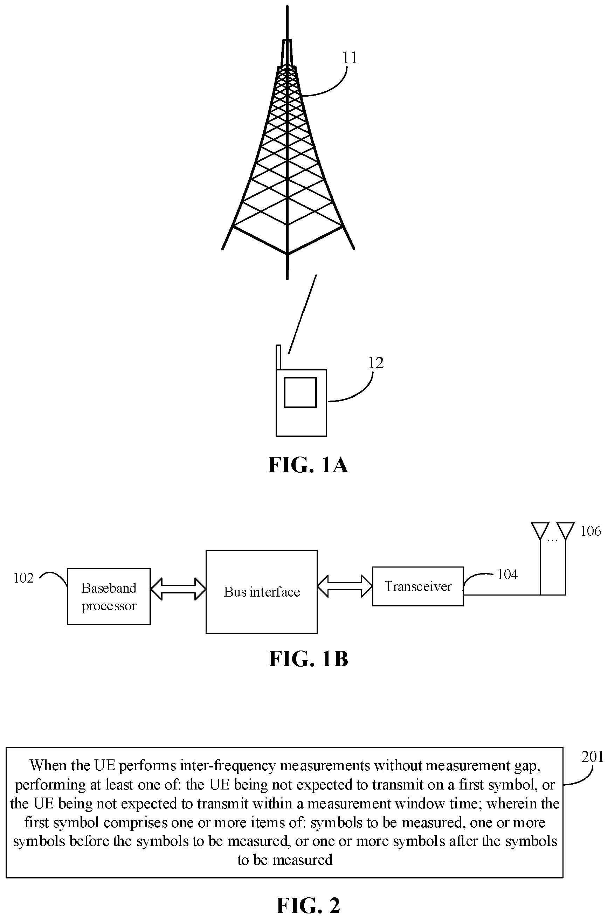

Referring to FIG. 1A, the embodiments of the present disclosure are described below in combination with the accompanying drawings. A transmission method and device provided by the embodiments of the present disclosure may be applied to a wireless communication system. FIG. 1A is a schematic diagram of the architecture of a wireless communication system provided by the disclosure. As illustrated in FIG. 1A, the wireless communication system can include: a network device 11 and a UE 12. The UE 12 may be denoted as UE12. The UE 12 may communicate (transmit signaling or data) with the network device 11. In practical applications, the connection among the above devices may be a wireless connection. In order to conveniently and intuitively represent the connection relationship among the devices, solid lines are used in FIG. 1A.

The network device 11 provided in the present disclosure may be a base station. The base station may be a commonly used base station, an evolved node base station (eNB), or a network device (for example, a next generation node base station (gNB) or a Transmission and Reception Point (TRP)) in the 5G system.

The UE 12 provided in the present disclosure may be a mobile phone, a tablet personal computer, a laptop computer, a Ultra-Mobile Personal Computer (UMPC), a Netbook or Personal Digital Assistant (PDA), a Mobile Internet Device (MID), a wearable device or vehicle-mounted device, etc.

FIG. 1B illustrates the UE 12 of the embodiments, not covered by the claimed invention, of the present disclosure. The UE 12 may include a baseband processor 102 in the UE 12.

According to the present disclosure, the baseband processor 102 is configured to stop transmission on a first symbol and/or within a measurement window when a UE performs inter-frequency measurements without measurement gap. The first symbol includes one or more items of the following: the symbols to be measured, one or more symbols before the symbols to be measured, or one or more symbols after the symbols to be measured.

The UE 12 may also include a transceiver 104. The transceiver 104 may include a sending circuit and a receiving circuit. The sending circuit is configured to modulate a baseband signal generated by the baseband processor 102 by up conversion to obtain a high-frequency carrier signal. The high-frequency carrier signal is transmitted through an antenna 106. The receiving circuit 106 operates on the high-frequency signal received by the antenna 106 by down conversion to obtain a low-frequency baseband signal. The number of antennas 106 is one or more.

Referring to FIG. 2, the embodiments of the present disclosure provide a transmission method. The execution entity of the method is the UE. The method includes step S201.

At S201, the UE is not expected to transmit on a first symbol and/or within a measurement window when the UE performs inter-frequency measurements without measurement gap. The first symbol includes one or more items of: (1) the symbols to be measured; (2) one or more symbols before the symbols to be measured; or (3) one or more symbols after the symbols to be measured.

It is to be understand that the transmission method is applicable to one or more of the following scenarios:
(1) the measured inter-frequency or cell is TDD;
(2) the measured inter-frequency or cell is millimeter wave (FR2); or
(3) the data sub-carrier spacing of the measured inter-frequency or cell is different from the data sub-carrier spacing of a serving cell, and the UE does not support simultaneous data transmission and measurement at different sub-carrier spacings.

In some implementation modes, the operation that the UE being not expected to transmit includes: not sending or receiving, for example, not sending or receiving by the UE in the serving cell.

Not sending includes one or more of:
(1) not sending a PUCCH;
(2) not sending a PUSCH; or
(3) not sending an SRS.

Not receiving includes one or more of:
(1) not receiving a PDCCH;
(2) not receiving a PDSCH;
(3) not receiving a TRS; or
(4) not receiving a CSI-RS.

In some implementation modes, the operation that the UE being not expected to transmit on the first symbol and/or within the measurement window may include at least one of: when the frequency or cell of the inter-frequency measurements is synchronous with the serving cell, transmission is stopped on the first symbol; or, when the frequency or cell of the inter-frequency measurements is not synchronous with the serving cell, transmission is stopped within the measurement window.

In some implementation modes, the method may also include the following operation.

First information is received. The first information indicates one or more of:
(1) whether sub-frame boundary across the serving cell and inter-frequency neighbor cells is aligned;
(2) whether System Frame Number (SFN) across the serving cell and the inter-frequency neighbor cells is aligned;
(3) whether frame boundary across serving cell and inter-frequency neighbor cells is aligned;
(4) whether the UE can utilize the serving cell timing to derive an SSB index of inter-frequency neighbor cell; or
(5) whether timings of SSBs across the serving cell and the inter-frequency cells are aligned.

Exemplarily, the first information is synchronization information. The synchronization information is "TRUE" or "1", which indicates that the SFN and frame boundary across the servicing cell and the inter-frequency neighbor cells are aligned. The synchronization information is "FALSE" or "0", which indicates that the SFN and frame boundary across the servicing cell and the inter-frequency neighbor cells are aligned. It is to be understood that the content of the first information is not specified.

In some implementation modes, the method may also include the following operation.

When a first condition is satisfied, it is determined that the frequency or cell of the inter-frequency measurement is synchronous with the serving cell.

The first condition includes one or more of:
(1) the frequency of the inter-frequency measurement overlaps at least partially (overlaps completely or partially) with the frequency of the serving cell; or
(2) the symbols to be measured of the inter-frequency measurement are included in a BWP activated by the UE, for example, the symbols to be measured of the inter-frequency measurement are completely included in the BWP activated by the UE.

In some implementation modes, the frequency or cell of the inter-frequency measurement being synchronous with the serving cell represents one or more of the following:
(1) the sub-frame boundary across the serving cell and the inter-frequency neighbor cells is aligned;
(2) the SFN across the serving cell and the inter-frequency neighbor cells is aligned;
(3) the frame boundary across the serving cell and the inter-frequency neighbor cells is aligned;
(4) the UE can utilize the serving cell timing to derive the SSB index of inter-frequency neighbor cell; or
(5) the timings of SSBs across the serving cell and the inter-frequency cells are aligned.

In some implementation modes, the method may also include the following operation.

Second information is sent. The second information indicates whether the UE supports a first capability. The first capability includes one or more of:
(1) the inter-frequency measurements without measurement gap; or
(2) when the sub-carrier spacing of the serving cell is different from a sub-carrier spacing of the inter-frequency neighbor cell, at least one of receiving data from the serving cell or measuring the neighbor cell is performed.

In some implementation modes, the method may also include that: a measurement configuration is received. The measurement configuration includes one or more of:
(1) the measurement window;
(2) information indicating the inter-frequency measurements without measurement gap. For example, information indicating UE to perform inter-frequency measurements without measurement gap. Exemplarily, the information is "TRUE" or "1", which indicates that the inter-frequency measurements do not need a measurement gap; the information is "FALSE" or "0", which indicates that the inter-frequency measurements need a measurement gap; or
(3) information indicating whether the inter-frequency measurement is performed out of a measurement gap. For example, information indicating whether the inter-frequency measurements are performed out of a measurement gap. Exemplarily, the information is "TRUE" or "1", which indicates that the UE performs measurements out of a measurement gap; the information is "FALSE" or "0", which indicates that the UE performs measurements within a measurement gap.

It is to be understood that the content of the indicating information in (2) and (3) above is not specified.

In the embodiments of the present disclosure, if the inter-frequency measurements are without measurement gap, the UE stops transmission on the symbols to be measured, one or more symbols before the symbols to be measured, and/or one or more symbols after the symbols to be measured, and/or within the measurement window. In this way, while the overhead is reduced, a loss in performance of the system caused by the uplink and downlink interference is avoided.

The implementation modes of the transmission method in the embodiments of the present disclosure are introduced below in combination with first embodiment to sixth embodiment not covered by the claimed invention.

### First Embodiment not covered by the claimed invention

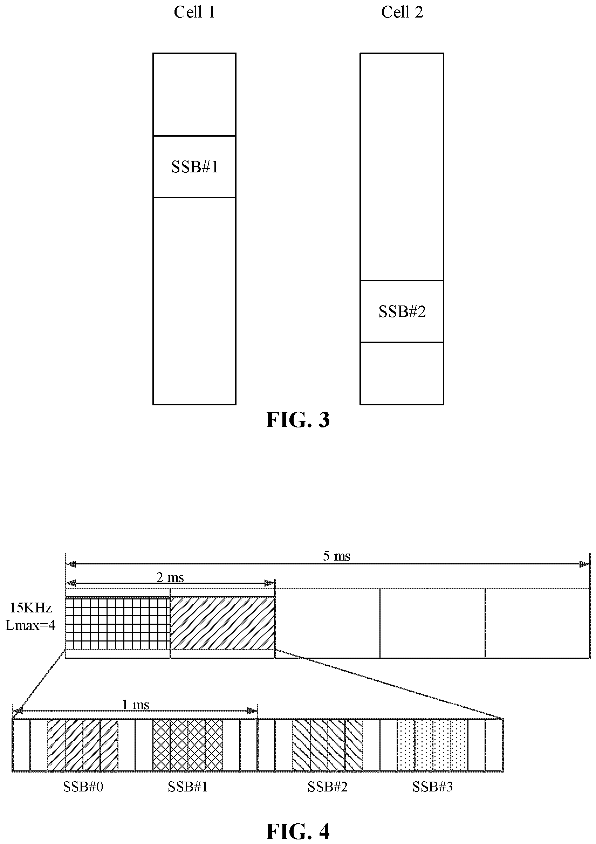

Referring to FIG. 3, a serving cell performs measurement for an inter-frequency neighbor cell, that is, the measurement on a reference signal SSB#2 is performed. The SSB is a synchronization signal block including a Primary Synchronization Signal (PSS), a Secondary Synchronization Signal (SSS) and a Physical Broadcast Channel (PBCH).

FIG. 4 illustrates the transmission of the SSB in the time domain. In the present embodiment not covered by the claimed invention, a measurement window (SSB Measurement Time Configuration (SMTC) window time) is 2ms.
(1) Cell 1 is a serving cell, cell 2 is a TDD cell to be measured, SSB#0 and SSB#1 are reference symbols to be measured of the cell 2, and 2ms (including SSB#0, SSB#1, SSB#2 and SSB#3) is the measurement window (SMTC window time).
(2) The UE receives synchronization information sent by the network. The synchronization information is "TRUE", which indicates that the SFN and the frame boundary across the cell 2 and the cell 1 are aligned.
(3) The UE performs the inter-frequency measurement on the cell 2, that is, the SSB#2 is measured. Transmission limitations during the measurement include one or more of:
   the UE does not receive or transmit data on the SSB#0;
   the UE does not receive or transmit data on the SSB#1;
   the UE does not receive or send data on the previous symbol of SSB#0 and the following symbol of SSB#0; or
   the UE does not receive or transmit data on the previous symbol of SSB#1 and the following symbol of SSB#1.

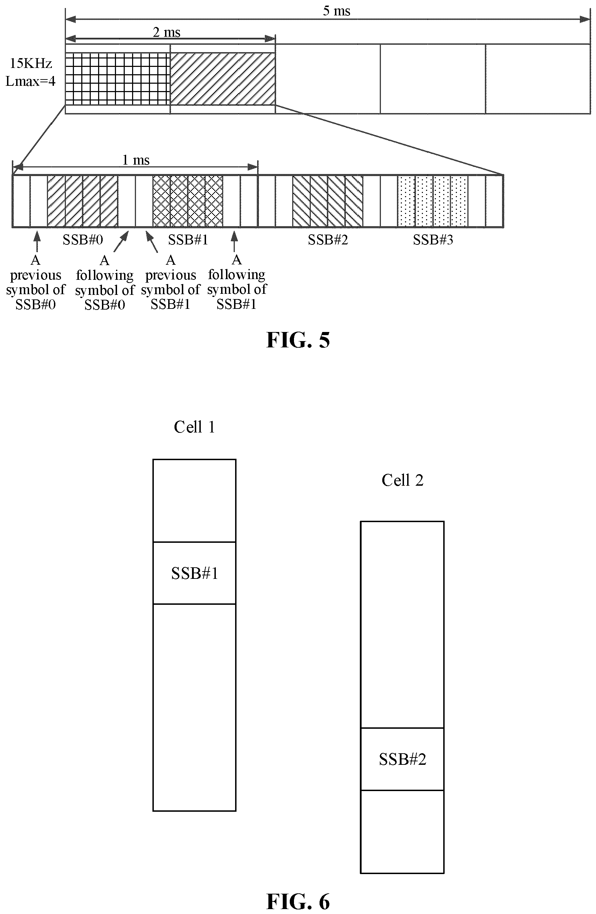

As illustrated in FIG. 5, the UE does not receive or transmit data on the SSB#0 and the SSB#1, meanwhile, the UE does not receive or transmit data on the previous symbol of SSB#0 and the following symbol of SSB#0, and the UE does not receive or transmit data on the previous symbol of SSB#1 and the following symbol of SSB#1.

### Second Embodiment not covered by the claimed invention

Referring to FIG. 6, a serving cell performs measurement for an inter-frequency neighbor cell, that is, the measurement on a reference signal SSB#2 is performed. The SSB is a synchronization signal block including a PSS, an SSS and a PBCH.

FIG. 4 illustrates the transmission of the SSB in the time domain. In the present embodiment not covered by the claimed invention, a measurement window (SMTC window time) is 2ms.
(1) Cell 1 is a serving cell, cell 2 is a TDD cell to be measured, SSB#0 and SSB#1 are reference symbols to be measured of the cell 2, and 2ms (including SSB#0, SSB#1, SSB#2 and SSB#3) is the measurement window.
(2) The UE reports to the network that the UE supports the inter-frequency measurements without measurement gap.
(3) The UE receives synchronization message sent by the network. The synchronization message is "FALSE", which indicates one or more of the following: (a) the cell 2 and the cell 1 are not synchronous; or (b) the frame boundary or SFN is not aligned.
(4) The UE performs inter-frequency measurement on the cell 2, that is, the SSB#2 is measured. A transmission limitation during the measurement is that: the UE does not receive or send data within the measurement window (SMTC window time) 2ms.

### Third Embodiment not covered by the claimed invention

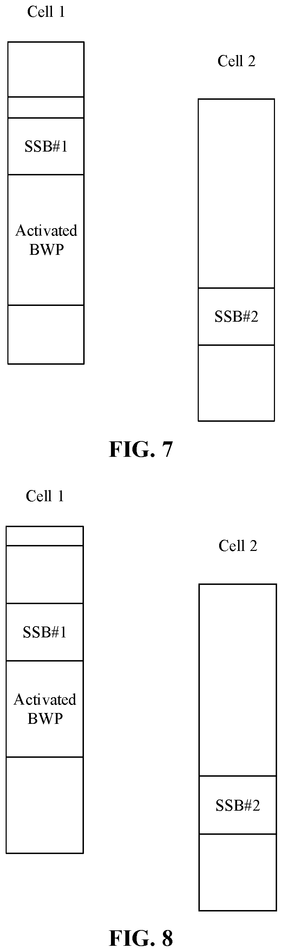

Referring to FIG. 7, a serving cell performs measurement for an inter-frequency neighbor cell, that is, the measurement is performed on a reference signal SSB#2. The SSB is a synchronization signal block including a PSS, an SSS and a PBCH.

FIG. 4 illustrates the transmission of the SSB in the time domain. In the present embodiment not covered by the claimed invention, a measurement window (SMTC window time) is 2ms.
(1) Cell 1 is a serving cell, cell 2 is a TDD cell to be measured, SSB#0 and SSB#1 are reference symbols to be measured of the cell 2, and 2ms (including SSB#0, SSB#1, SSB#2 and SSB#3) is the measurement window.
(2) If the UE determines that the SSB#2 of the cell 2 is within the BWP activated by the UE, one or more of the following are determined: (a) the cell 2 and the cell 1 are synchronous; or (b) the SFN and the frame boundary are aligned.
(3) The UE performs the inter-frequency measurement on the cell 2, that is, the SSB#2 is measured. Transmission limitations during the measurement include one or more of:
   the UE does not receive or transmit data on the SSB#0;
   the UE does not receive or transmit data on the SSB#1;
   the UE does not receive or send data on the previous symbol of SSB#0 and the following symbol of SSB#0; or
   the UE does not receive or transmit data on the previous symbol of SSB#1 and the following symbol of SSB#1.

As illustrated in FIG. 5, the UE does not receive or transmit data on the SSB#0 and the SSB#1, meanwhile, the UE does not receive or transmit data on the previous symbol of SSB#0 and the following symbol of SSB#0, and the UE does not receive or transmit data on the previous symbol of SSB#1 and the following symbol of SSB#1.

### Fourth Embodiment not covered by the claimed invention

Referring to FIG. 8, a serving cell performs measurement for an inter-frequency neighbor cell, that is, the measurement is performed on a reference signal SSB#2. The SSB is a synchronization signal block including a PSS, an SSS and a PBCH.

FIG. 4 illustrates the transmission of the SSB in the time domain. In the present embodiment not covered by the claimed invention, a measurement window (SMTC window time) is 2ms.
(1) Cell 1 is a serving cell, cell 2 is a TDD cell to be measured, SSB#0 and SSB#1 are reference symbols to be measured of the cell 2, and 2ms (including SSB#0, SSB#1, SSB#2 and SSB#3) is the measurement window.
(2) If the UE determines that the SSB#2 of the cell 2 is not completely included in the BWP activated by the UE, it is determined that the cell 2 is not synchronous with the cell 1.
(3) The UE reports that the UE supports the inter-frequency measurements without measurement gap.
(4) The UE performs inter-frequency measurement on the cell 2, that is, the SSB#2 is measured. A transmission limitation during the measurement is that: the UE does not receive or send data within the measurement window (SMTC window time) 2ms.

### Fifth Embodiment not covered by the claimed invention

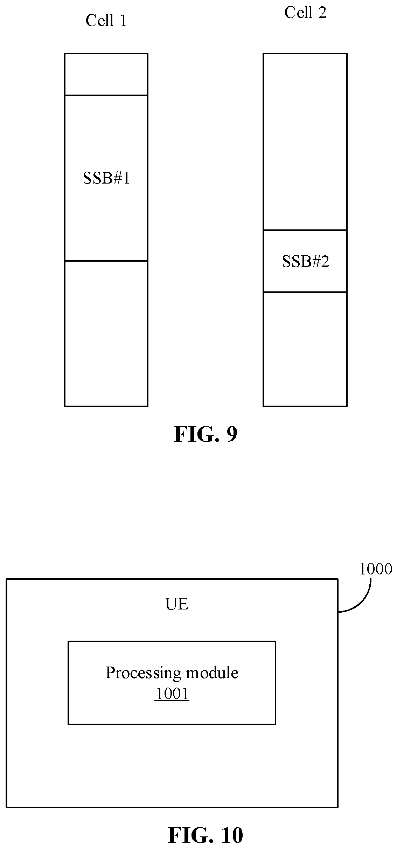

Referring to FIG. 9, a serving cell performs measurement for an inter-frequency neighbor cell, that is, the measurement is performed on a reference signal SSB#2. The SSB is a synchronization signal block including a PSS, an SSS and a PBCH.

FIG. 4 illustrates the transmission of the SSB in the time domain. In the present embodiment not covered by the claimed invention, a measurement window (SMTC window time) is 2ms.
(1) Cell 1 is a serving cell, cell 2 is a cell to be measured, SSB#0 and SSB#1 are reference symbols to be measured of the cell 2, 2ms (including SSB#0, SSB#1, SSB#2 and SSB#3) is the measurement window (SMTC window time), a sub-carrier spacing of the cell 1 is 30KHz, and a sub-carrier spacing of the cell 2 is 15KHz.
(2) When the UE reports to the network that the UE does not support performing simultaneously reception of data from the serving cell and measurement for the neighbor cell when the sub-carrier spacing of the serving cell is different from the sub-carrier spacing of the inter-frequency neighbor cell.
(3) The UE receives synchronization information sent by the network. The synchronization information is "TRUE", which indicates that the SFN and the frame boundary across the cell 2 and the cell 1 are aligned.
(4) The UE performs the inter-frequency measurement on the cell 2, that is, the SSB#2 is measured. Transmission limitations during the measurement include one or more of:
   the UE does not receive or transmit data on the SSB#0;
   the UE does not receive or transmit data on the SSB#1;
   the UE does not receive or send data on the previous symbol of SSB#0 and the following symbol of SSB#0; or
   the UE does not receive or transmit data on the previous symbol of SSB#1 and the following symbol of SSB#1.

As illustrated in FIG. 5, the UE does not receive or transmit data on the SSB#0 and the SSB#1, meanwhile, the UE does not receive or transmit data on the previous symbol of SSB#0 and the following symbol of SSB#0, and the UE does not receive or transmit data on the previous symbol of SSB#1 and the following symbol of SSB#1.

### Sixth Embodiment not covered by the claimed invention

Referring to FIG. 9, a serving cell performs measurement for an inter-frequency neighbor cell, that is, the measurement is performed on a reference signal SSB#2. The SSB is a synchronization signal block including a PSS, an SSS and a PBCH.

FIG. 4 illustrates the transmission of the SSB in the time domain. In the present embodiment not covered by the claimed invention, a measurement window (SMTC window time) is 2ms.
(1) Cell 1 is a serving cell, cell 2 is a cell of millimeter wave (FR2) to be measured, SSB#0 and SSB#1 are reference symbols to be measured of the cell 2, and 2ms (including SSB#0, SSB#1, SSB#2 and SSB#3) is the measurement window (SMTC window time).
(2) The UE receives synchronization information sent by the network. The synchronization information is "TRUE", which indicates that the SFN and the frame boundary of the cell 2 and the cell 1 are aligned.
(3) The UE performs the inter-frequency measurement on the cell 2, that is, the SSB#2 is measured. Transmission limitations during the measurement include one or more of:
   the UE does not receive or transmit data on the SSB#0;
   the UE does not receive or transmit data on the SSB#1;
   the UE does not receive or send data on the previous symbol of SSB#0 and the following symbol of SSB#0; or
   the UE does not receive or transmit data on the previous symbol of SSB#1 and the following symbol of SSB#1.

As illustrated in FIG. 5, the UE does not receive or transmit data on the SSB#0 and the SSB#1, meanwhile, the UE does not receive or transmit data on the previous symbol of SSB#0 and the following symbol of SSB#0, and the UE does not receive or transmit data on the previous symbol of SSB#1 and the following symbol of SSB#1.

Referring to FIG. 10, the embodiments of the present disclosure provide a UE. The UE 1000 may include a processing module.

The processing module 1001 is configured to: when the UE performs the inter-frequency measurements without measurement gap, perform at least one of: the UE being not expected to transmit on a first symbol, or the UE being not expected to transmit within a measurement window.

The first symbol includes one or more items of: the symbols to be measured, one or more symbols before the symbols to be measured, or one or more symbols after the symbols to be measured.

In some implementation modes, the processing module 1001 may be a baseband processor.

In some implementation modes, the operation of performing at least one of: the UE being not expected to transmit on a first symbol, or the UE being not expected to transmit includes the following operation.

When the frequency or cell of the inter-frequency measurements is synchronous with a serving cell, the UE is not expected to transmit on the first symbol;
and/or,
when the frequency or cell of the inter-frequency measurement is not synchronous with the serving cell, the UE is not expected to transmit within the measurement window.

In some implementation modes, the UE 1000 may also include: a first receiving module.

The first receiving module is configured to receive first information. The first information indicates one or more of:
(1) whether sub-frame boundary across the serving cell and inter-frequency neighbor cells is aligned;
(2) whether SFN across the serving cell and the inter-frequency neighbor cells is aligned;
(3) whether frame boundary across serving cell and inter-frequency neighbor cells is aligned;
(4) whether the UE can utilize the serving cell timing to derive an SSB index of inter-frequency neighbor cell; or
(5) whether timings of SSBs across the serving cell and the inter-frequency cells are aligned.

In some implementation modes, the UE 1000 may also include: a determining module.

The determining module is configured to determine that the frequency or cell of the inter-frequency measurements is synchronous with the serving cell when the first condition is satisfied.

The first condition includes one or more of:
(1) the frequency of the inter-frequency measurements overlaps at least partially with the frequency of the serving cell; or
(2) the symbols to be measured of the inter-frequency measurements are completely contained in the BWP activated by the UE.

In some implementation modes, that the frequency or cell of the inter-frequency measurements is synchronous with the serving cell represents one or more of:
(1) the sub-frame boundary across the serving cell and the inter-frequency neighbor cells is aligned;
(2) the SFN across the serving cell and the inter-frequency neighbor cells is aligned;
(3) the frame boundary across the serving cell and the inter-frequency neighbor cells is aligned;
(4) the UE can utilize the serving cell timing to derive the SSB index of inter-frequency neighbor cell; or
(5) the timings of SSBs across the serving cell and the inter-frequency cells are aligned.

In some implementation modes, the UE 1000 may also include: a sending module.

The sending module is configured to send second information. The second information indicates whether the UE supports a first capability. The first capability includes one or more of:
(1) the inter-frequency measurements without measurement gap; or
(2) when the sub-carrier spacing of the serving cell is different from a sub-carrier spacing of the inter-frequency neighbor cell, at least one of receiving data from the serving cell or measuring the neighbor cell is performed.

In some implementation modes, the UE 1000 may also include: a second receiving module.

The second receiving module is configured to receive a measurement configuration. The measurement configuration includes one or more of:
(1) the measurement window; or
(2) the information indicating the inter-frequency measurements without measurement gap. For example, the information indicating the UE to perform the inter-frequency measurements without measurement gap. Exemplarily, the information is "TRUE" or "1", which indicates the inter-frequency measurements without measurement gap; the information is "FALSE" or "0", which indicates that the inter-frequency measurements need a measurement gap; or
(3) the information indicating whether the inter-frequency measurements are performed out of a measurement gap. For example, the information indicating whether the inter-frequency measurements are performed out of a measurement gap. Exemplarily, the information is "TRUE" or "1", which indicates that the UE performs measurement out of a measurement gap; the information is "FALSE" or "0", which indicates that the UE performs measurement within a measurement gap.

In some implementation modes, the operation that UE being not expected to transmit includes: not sending or receiving by the UE in the serving cell.

Not sending includes one or more of the following:
(1) not sending a PUCCH;
(2) not sending a PUSCH; and
(3) not sending an SRS;

Not receiving includes one or more of the following:
(1) not receiving a PDCCH;
(2) not receiving a PDSCH;
(3) not receiving a TRS; and
(4) not receiving a CSI-RS.

The UE provided by the embodiments of the present disclosure can perform the method embodiment illustrated in FIG. 2 with similar implementation principles and technical effects, and elaborations are omitted herein.

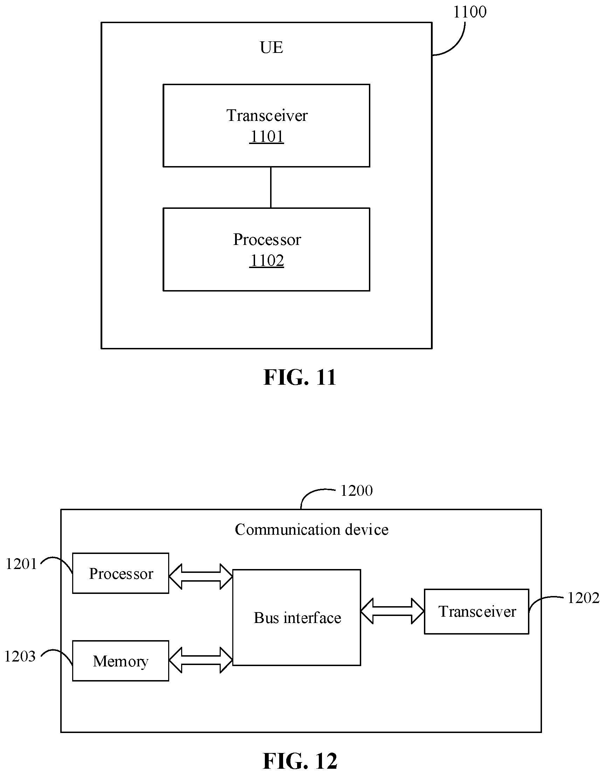

Referring to FIG. 11, the present disclosure provides a UE. The UE 1100 may include: a transceiver 1101 and a processor 1102.

The processor 1102 is configured to: when the UE performs the inter-frequency measurements without measurement gap, perform at least one of: UE being not expected to transmit on a first symbol, or UE being not expected to transmit within a measurement window.

The first symbol includes one or more items of: the symbols to be measured, one or more symbols before the symbols to be measured, or one or more symbols after the symbols to be measured.

In some implementation modes, the processor 1102 may be a baseband processor.

In some implementation modes, the operation of performing at least one of: UE being not expected to transmit on a first symbol, or UE being not expected to transmit includes the following operation.

When the frequency or cell of the inter-frequency measurement is synchronous with a serving cell, UE is not expected to transmit on the first symbol;
and/or,
when the frequency or cell of the inter-frequency measurement is not synchronous with the serving cell, UE is not expected to transmit within the measurement window.

In some implementation modes, the processor 1102 is further configured to receive the first information. The first information indicates one or more of:
(1) whether sub-frame boundary across the serving cell and inter-frequency neighbor cells is aligned;
(2) whether SFN across the serving cell and the inter-frequency neighbor cells is aligned;
(3) whether frame boundary across serving cell and inter-frequency neighbor cells is aligned;
(4) whether the UE can utilize the serving cell timing to derive an SSB index of inter-frequency neighbor cell; or
(5) whether timings of SSBs across the serving cell and the inter-frequency cells are aligned.

In some implementation modes, the processor 1102 is configured to determine that the frequency or cell of the inter-frequency measurements is synchronous with the serving cell if the first condition is satisfied.

The first condition includes one or more of:
(1) the frequency of the inter-frequency measurements overlaps at least partially with the frequency of the serving cell; or
(2) the symbols to be measured of the inter-frequency measurements are completely contained in the BWP activated by the UE.

In some implementation modes, the frequency or cell of the inter-frequency measurement being synchronous with the serving cell represents one or more of:
(1) the sub-frame boundary across the serving cell and the inter-frequency neighbor cells is aligned;
(2) the SFN across the serving cell and the inter-frequency neighbor cells is aligned;
(3) the frame boundary across the serving cell and the inter-frequency neighbor cells is aligned;
(4) the UE can utilize the serving cell timing to derive the SSB index of inter-frequency neighbor cell; or
(5) the timings of SSBs across the serving cell and the inter-frequency cells are aligned.

In some implementation modes, the processor 1102 is further configured to send the second information. The second information indicates whether the UE supports the first capability. The first capability includes one or more of:
(1) the inter-frequency measurements without measurement gap; and
(2) when sub-carrier spacing of the serving cell is different from a sub-carrier spacing of the inter-frequency neighbor cell, at least one of receiving data from the serving cell or measuring the neighbor cell is performed.

In some implementation modes, the processor 1102 is further configured to receive a measurement configuration. The measurement configuration includes one or more of:
(1) the measurement window; or
(2) the information indicating the inter-frequency measurement without measurement gap. For example, the information indicating the UE to perform inter-frequency measurements without measurement gap. Exemplarily, the information is "TRUE" or "1", which indicates the inter-frequency measurement without measurement gap; the information is "FALSE" or "0", which indicates that the inter-frequency measurement needs a measurement gap; or
(3) the information indicating whether the inter-frequency measurement is performed out of a measurement gap. For example, the information indicating whether the inter-frequency measurement is performed out of a measurement gap. Exemplarily, the information is "TRUE" or "1", which indicates that the UE performs measurements without measurement gap; the information is "FALSE" or "0", which indicates that the UE performs measurements with a measurement gap.

In some implementation modes, the operation that transmission is stopped includes: not sending or receiving by the UE in the serving cell.

Not sending includes one or more of:
(1) not sending a PUCCH;
(2) not sending a PUSCH; or
(2) not sending an SRS;

Not receiving includes one or more of:
(1) not receiving a PDCCH;
(2) not receiving a PDSCH;
(3) not receiving a TRS; or
(4) not receiving a CSI-RS.

The UE provided by the present disclosure can perform the method embodiment illustrated in FIG. 2 with similar implementation principles and technical effects, and elaborations are omitted herein.

FIG. 12 is a structure diagram of a communication device to which the present disclosure is applied. As illustrated in FIG. 12, the communication device 1200 may include: a processor 1201, a transceiver 1202, a memory 1203 and a bus interface.

In the present disclosure, the communication device 1200 may also include: a computer program stored in the memory 1203 and capable of running in the processor 1201. When executed by the processor 1201, the computer program implements the steps in the embodiment in FIG. 2.

In some implementation modes, the processor 1201 may be a baseband processor.

In FIG. 12, a bus architecture may include any number of interconnected buses and bridges which are linked together by various circuits of one or more processors represented by the processor 1201 and memories represented by the memory 1203. The bus architecture may also link various other circuits together, such as peripheral devices, voltage regulators, and power management circuits, which are well known in the field and therefore are not described further here. The bus interface provides the interface. The transceiver 1202 may be a plurality of components, that is, includes a transmitter and a receiver, which provide a unit for communicating with a variety of other devices on a transmission medium.

The processor 1201 is responsible for managing the bus architecture and general processing, and the memory 1203 may store the data used by the processor 1201 to perform operations.

The communication device provided by the present disclosure can perform the method embodiment illustrated in FIG. 2 with similar implementation principles and technical effects, and elaborations are omitted herein.

The embodiments of the present disclosure also provide a computer-readable storage medium having stored thereon a computer program. When executed by the processor, the computer program implements the steps of the transmission method.

The present disclosure also provides a communication apparatus, which is a UE or a chip in the UE or a baseband processor in the UE. The communication apparatus is configured to:
when the UE performs the inter-frequency measurements without measurement gap, perform at least one of: stop transmission on a first symbol, or stop transmission within a measurement window.

The first symbol includes one or more items of: the symbols to be measured, one or more symbols before the symbols to be measured, or one or more symbols after the symbols to be measured.

The steps of the method or algorithm described in the disclosed content of the present disclosure can be implemented by hardware or by a processor executing software instructions. The software instructions may include corresponding software modules. The software modules may be stored in an RAM, a flash memory, an ROM, an EPROM, an EEPROM, a register, a hard disk, a mobile hard disk, a CD-ROM, or any other storage medium known in the field. An exemplary storage medium is coupled to a processor, so that the processor can read information from and write information to the storage medium. Of course, the storage medium can also be a part of the processor. The processor and the storage medium can reside in an Application Specific Integrated Circuit (ASIC). In addition, the ASIC can reside in a core network interface device. Of course, the processor and the storage medium can also exist as discrete components in the core network interface device.

Those skilled in the art may realize that, in one or more abovementioned examples, the functions described in the present disclosure may be realized by hardware, software, firmware or any combination thereof. In case of implementation with the software, these functions are stored in a computer-readable medium or transmitted as one or more instructions or codes in the computer-readable medium. The computer-readable medium includes a computer storage medium and a communication medium, and the communication medium includes any medium for conveniently transmitting a computer program from one place to another place. The storage medium may be any available medium accessible for a universal or dedicated computer.

The specific implementation methods described above further describe in detail the purposes, technical solutions and beneficial effects of the present disclosure. It is to be understood that the above is only the specific implementations of the present disclosure and is not intended to limit the scope of protection as defined by the appended claims.

Those skilled in the art should understand that the embodiments of the present disclosure may be provided as a method, a system or a computer program product Therefore, the embodiment of the disclosure may use form of a pure hardware embodiment, a pure software embodiment, or an embodiment combining software and hardware. Moreover, the embodiment of the disclosure may use form of a computer program product implemented on one or more computer-available storage media (including, but not limited to, a disk memory, a Compact Disc Read-Only Memory (CD-ROM), and an optical memory) including computer-available program codes.

The embodiments of the present disclosure are described with reference to flowcharts and/or block diagrams of the method, the device (system) and the computer program product according to the embodiments of the present disclosure. It is to be understood that each flow and/or block in the flowchart and/or block diagram, and the combination of the flow and/or block in the flowchart and/or block diagram can be implemented by the computer program instructions. These computer program instructions can be provided to a processor of a general-purpose computer, a special-purpose computer, an embedded processor or other programmable data processing devices to generate a machine, so that instructions which are executed by the processor of the computer or other programmable data processing devices generate a device which is used for implementing the specified functions in one or more flows of the flowchart and/or one or more blocks of the block diagram.

These computer program instructions may also be stored in the computer-readable memory which can guide the computer or other programmable data processing devices to work in a particular way, so that the instructions stored in the computer-readable memory generate a product including an instruction device. The instruction device implements the specified functions in one or more flows of the flowchart and/or one or more blocks of the block diagram.

These computer program instructions may also be loaded on the computer or other programmable data processing devices, so that a series of operation steps are performed on the computer or other programmable data processing devices to generate the processing implemented by the computer, and the instructions executed on the computer or other programmable data processing devices provide the steps for implementing the specified functions in one or more flows of the flowchart and/or one or more blocks of the block diagram.

It is to be understood that the division of the above modules is only a division of logical functions, and these modules may be fully or partially integrated on a physical entity or separated physically in practical implementation. These modules can all be implemented in the form of software called by a processing element or in the form of hardware. Or part of the modules can be implemented in the form of software called by a processing element, and part of the modules can be implemented in the form of hardware. For example, the determining module can be a separate processing element or can be implemented by integrating into a chip of the device; moreover, the determining module can also be stored in the memory of the device in the form of program code. The function of the determining module is called and executed by a processing element of the device. The implementation of other modules is similar. In addition, all or part of these modules can be integrated or implemented independently. The processing element here can be an integrated circuit with a signal processing capability.

Terms "first", "second" and the like in the specification and claims of the present disclosure are used to distinguish similar objects and do not have to describe a specific sequence or order. It is to be understood that the objects may be exchanged under appropriate circumstances, so that the embodiments of the present disclosure described here are implemented, for example, in an order different from that described or shown here. In addition, terms "include" and "have" and any variations thereof are intended to cover non-exclusive inclusions. For example, it is not limited for processes, methods, systems, products or devices including a series of steps or units to clearly list those steps or units, and other steps or units which are not clearly listed or are inherent to these processes, methods, products or devices may be included instead. In addition, "and/or" is used in the specification and claims to indicate at least one of the connected objects. For example, A and/or B and/or C indicates seven cases, that is, individual A is included, individual B is included, individual C is included, both A and B exist, both B and C exist, both A and C exist, and A, B, and C all exist. Similarly, the use of "at least one of A or B" in the specification and claims should be understood as "separate A, separate B, or both A and B".

## Claims

1. A method for transmission, applied to a User Equipment, UE, comprising:
when the UE performs inter-frequency measurements without measurement gap, performing (201) at least one of:
when a cell of the inter-frequency measurements is synchronous with a serving cell, the UE being not expected to transmit on a first symbol; or
when the cell of the inter-frequency measurements is not synchronous with the serving cell, the UE being not expected to transmit within a measurement window;
wherein the first symbol comprises one or more items of: symbols to be measured, one or more symbols before the symbols to be measured, or one or more symbols after the symbols to be measured;
and **characterized by**:
wherein the cell of the inter-frequency measurements being synchronous with the serving cell represents one or more of:
a sub-frame boundary across the serving cell and inter-frequency neighbor cells is aligned;
a System Frame Number, SFN, across the serving cell and the inter-frequency neighbor cells is aligned;
the UE can utilize a serving cell timing to derive a SSB index of inter-frequency neighbor cell; or
timings of SSBs across the serving cell and the inter-frequency cells are aligned.

2. The method of claim 1**,** wherein the cell of the inter-frequency measurements being synchronous with the serving cell further represents:
a frame boundary across the serving cell and the inter-frequency neighbor cells is aligned.

3. The method of claim 1, further comprising:
receiving first information; wherein the first information indicates one or more of:
whether the sub-frame boundary across the serving cell and the inter-frequency neighbor cells is aligned;
whether the SFN across the serving cell and the inter-frequency neighbor cells is aligned;
whether the frame boundary across the serving cell and the inter-frequency neighbor cells is aligned;
whether the UE can utilize the serving cell timing to derive the SSB index of the inter-frequency neighbor cell; or
whether the timings of SSBs across the serving cell and the inter-frequency cells are aligned.

4. The method of claim 1, further comprising:
when a first condition is satisfied, determining that the cell of the inter-frequency measurements is synchronous with the serving cell;
wherein the first condition comprises one or more of:
the frequency of the inter-frequency measurements overlaps at least partially with a frequency of the serving cell; or
the symbols to be measured of the inter-frequency measurements are comprised in a Bandwidth Part, BWP, activated by the UE.

5. The method of claim 1, further comprising:
sending second information; wherein the second information indicates whether the UE supports a first capability; and the first capability comprises one or more of:
the inter-frequency measurements without measurement gap; or
when a sub-carrier spacing of a serving cell is different from a sub-carrier spacing of an inter-frequency neighbor cell, at least one of: receiving data from the serving cell, or measuring the neighbor cell is performed.

6. The method of claim 1, further comprising:
receiving a measurement configuration; wherein the measurement configuration comprises one or more of:
the measurement window; or
information indicating the inter-frequency measurements without measurement gap.

7. A User Equipment, UE, comprising:
a processing module (1001), configured to, when the UE performs inter-frequency measurements without measurement gap, perform at least one of:
when a cell of the inter-frequency measurements is synchronous with a serving cell, the UE being not expected to transmit on a first symbol; or
when the cell of the inter-frequency measurements is not synchronous with the serving cell, the UE being not expected to transmit within a measurement window;
wherein the first symbol comprises one or more items of: symbols to be measured, one or more symbols before the symbols to be measured, or one or more symbols after the symbols to be measured;
and **characterized by**:
wherein the cell of the inter-frequency measurements being synchronous with the serving cell represents one or more of:
a sub-frame boundary across the serving cell and inter-frequency neighbor cells is aligned;
a System Frame Number, SFN, across the serving cell and the inter-frequency neighbor cells is aligned;
the UE can utilize a serving cell timing to derive a SSB index of inter-frequency neighbor cell; or
timings of SSBs across the serving cell and the inter-frequency cells are aligned.

8. The UE of claim 7, wherein the cell of the inter-frequency measurements being synchronous with the serving cell further represents:
a frame boundary across the serving cell and the inter-frequency neighbor cells is aligned.

9. The UE of claim 7, wherein the processing module (1001) is further configured to:
receive first information; wherein the first information indicates one or more of:
whether the sub-frame boundary across the serving cell and the inter-frequency neighbor cells is aligned;
whether the SFN across the serving cell and the inter-frequency neighbor cells is aligned;
whether the frame boundary across the serving cell and the inter-frequency neighbor cells is aligned;
whether the UE can utilize the serving cell timing to derive the SSB index of the inter-frequency neighbor cell; or
whether the timings of SSBs across the serving cell and the inter-frequency cells are aligned.

10. The UE of claim 7, wherein the processing module (1001) is further configured to:
when a first condition is satisfied, determine that the cell of the inter-frequency measurements is synchronous with the serving cell;
wherein the first condition comprises one or more of:
the frequency of the inter-frequency measurements overlaps at least partially with a frequency of the serving cell; or
the symbols to be measured of the inter-frequency measurements are comprised in a Bandwidth Part, BWP, activated by the UE.

11. The UE of claim 7, wherein the processing module (1001) is further configured to:
send second information; wherein the second information indicates whether the UE supports a first capability; and the first capability comprises one or more of:
the inter-frequency measurements without measurement gap; or
when a sub-carrier spacing of a serving cell is different from a sub-carrier spacing of an inter-frequency neighbor cell, at least one of: receiving data from the serving cell, or measuring the neighbor cell is performed.

12. The UE of claim 7, wherein the processing module (1001) is further configured to:
receive a measurement configuration; wherein the measurement configuration comprises one or more of:
the measurement window; or
information indicating the inter-frequency measurements without measurement gap.

13. A computer-readable storage medium having stored thereon a computer program which, when executed by a processor associated with an UE, cause the UE to implement steps of the method for transmission of any one of claims 1 to 6.

## Patentansprüche

1. Verfahren zur Übertragung, angewendet auf ein Benutzergerät (User Equipment, UE), umfassend:
wenn das UE Zwischenfrequenzmessungen ohne Messspalt durchführt, Durchführen (201) von mindestens einem aus Folgendem:
wenn eine Zelle der Zwischenfrequenzmessungen synchron mit einer bedienenden Zelle ist, wird nicht erwartet, dass das UE an einem ersten Symbol überträgt; oder
wenn die Zelle der Zwischenfrequenzmessungen nicht synchron mit einer bedienenden Zelle ist, wird nicht erwartet, dass das UE in einem Messfenster überträgt;
wobei das erste Symbol ein oder mehrere Elemente aus Folgendem umfasst: Symbole, die gemessen werden sollen, ein oder mehrere Symbole vor den Symbolen, die gemessen werden sollen, oder ein oder mehrere Symbole nach den Symbolen, die gemessen werden sollen;
und **gekennzeichnet durch**:
wobei die Zelle der Zwischenfrequenzmessungen, die synchron mit der bedienenden Zelle ist, eines oder mehrere aus Folgendem darstellt:
eine Unterrahmengrenze über die bedienende Zelle und Zwischenfrequenz-Nachbarzellen hinweg ist ausgerichtet;
eine System Frame Number (SFN) über die bedienende Zelle und die Zwischenfrequenz-Nachbarzelle hinweg ist ausgerichtet;
das UE kann einen Zeitpunkt der bedienenden Zelle nutzen, um einen SSB-Index der Zwischenfrequenz-Nachbarzelle abzuleiten; oder
Zeitpunkte von SSBs über die bedienende Zelle und die Zwischenfrequenzzellen hinweg sind ausgerichtet.

2. Verfahren nach Anspruch 1, wobei die Zelle der Zwischenfrequenzmessungen, die synchron mit der bedienenden Zelle ist, ferner Folgendes darstellt:
eine Rahmengrenze über die bedienende Zelle und die Zwischenfrequenz-Nachbarzellen hinweg ist ausgerichtet.

3. Verfahren nach Anspruch 1, ferner umfassend:
Empfangen von ersten Informationen; wobei die ersten Informationen eines oder mehrere aus Folgendem angeben:
ob die Unterrahmengrenze über die bedienende Zelle und die Zwischenfrequenz-Nachbarzellen hinweg ausgerichtet ist;
ob die SFN über die bedienende Zelle und die Zwischenfrequenz-Nachbarzellen hinweg ausgerichtet ist;
ob die Rahmengrenze über die bedienende Zelle und die Zwischenfrequenz-Nachbarzellen hinweg ausgerichtet ist;
ob das UE den Zeitpunkt der bedienenden Zelle nutzen kann, um den SSB-Index der Zwischenfrequenz-Nachbarzelle abzuleiten; oder
ob die Zeitpunkte von SSBs über die bedienende Zelle und die Zwischenfrequenzzellen hinweg ausgerichtet sind.

4. Verfahren nach Anspruch 1, ferner umfassend:
wenn eine erste Bedingung erfüllt ist, Bestimmen, dass die Zelle der Zwischenfrequenzmessungen synchron mit der bedienenden Zelle ist;
wobei die erste Bedingung eines oder mehrere aus Folgendem umfasst:
die Frequenz der Zwischenfrequenzmessungen überlagert sich mindestens teilweise mit einer Frequenz der bedienenden Zelle; oder
die Symbole, die gemessen werden sollen, der Zwischenfrequenzmessungen, sind in einem Bandwidth Part (BWP) umfasst, aktiviert durch das UE.

5. Verfahren nach Anspruch 1, ferner umfassend:
Senden von zweiten Informationen; wobei die zweiten Informationen angeben, ob das UE eine erste Fähigkeit unterstützt; und die erste Fähigkeit umfasst eines oder mehrere aus Folgendem:
die Zwischenfrequenzmessungen ohne Messspalt; oder
wenn ein Unterträgerabstand einer bedienenden Zelle anders als ein Unterträgerabstand einer Zwischenfrequenz-Nachbarzelle ist, mindestens eines aus Folgendem: Empfangen von Daten von der bedienenden Zelle oder Messen der Nachbarzelle wird durchgeführt.

6. Verfahren nach Anspruch 1, ferner umfassend:
Empfangen einer Messkonfiguration, wobei die Messkonfiguration eines oder mehrere aus Folgendem umfasst:
das Messfenster; oder
Informationen, die die Zwischenfrequenzmessungen ohne Messspalt angeben.

7. Benutzergerät (UE), umfassend:
ein Verarbeitungsmodul (1001), das konfiguriert ist, um, wenn das UE Zwischenfrequenzmessungen ohne Messspalt durchführt, mindestens eines aus Folgendem durchzuführen:
wenn eine Zelle der Zwischenfrequenzmessungen synchron mit einer bedienenden Zelle ist, wird nicht erwartet, dass das UE an einem ersten Symbol überträgt; oder
wenn die Zelle der Zwischenfrequenzmessungen nicht synchron mit der bedienenden Zelle ist, wird nicht erwartet, dass das UE in einem Messfenster überträgt;
wobei das erste Symbol ein oder mehrere Elemente aus Folgendem umfasst: Symbole, die gemessen werden sollen, ein oder mehrere Symbole vor den Symbolen, die gemessen werden sollen, oder ein oder mehrere Symbole nach den Symbolen, die gemessen werden sollen;
und **gekennzeichnet durch**:
wobei die Zelle der Zwischenfrequenzmessungen, die synchron mit der bedienenden Zelle ist, eines oder mehrere aus Folgendem darstellt:
eine Unterrahmengrenze über die bedienende Zelle und Zwischenfrequenz-Nachbarzellen hinweg ist ausgerichtet;
eine System Frame Number (SFN) über die bedienende Zelle und die Zwischenfrequenz-Nachbarzelle hinweg ist ausgerichtet;
das UE kann einen Zeitpunkt der bedienenden Zelle nutzen, um einen SSB-Index der Zwischenfrequenz-Nachbarzelle abzuleiten; oder
Zeitpunkte von SSBs über die bedienende Zelle und die Zwischenfrequenzzellen hinweg sind ausgerichtet.

8. UE nach Anspruch 7, wobei Zelle der Zwischenfrequenzmessungen, die synchron mit der bedienenden Zelle ist, ferner Folgendes darstellt:
eine Rahmengrenze über die bedienende Zelle und die Zwischenfrequenz-Nachbarzellen hinweg ist ausgerichtet.

9. UE nach Anspruch 7, wobei das Verarbeitungsmodul (1001) ferner für Folgendes konfiguriert ist:
Empfangen von ersten Informationen; wobei die ersten Informationen eines oder mehrere aus Folgendem angeben:
ob die Unterrahmengrenze über die bedienende Zelle und die Zwischenfrequenz-Nachbarzellen hinweg ausgerichtet ist;
ob die SFN über die bedienende Zelle und die Zwischenfrequenz-Nachbarzellen hinweg ausgerichtet ist;
ob die Rahmengrenze über die bedienende Zelle und die Zwischenfrequenz-Nachbarzellen hinweg ausgerichtet ist;
ob das UE den Zeitpunkt der bedienenden Zelle nutzen kann, um den SSB-Index der Zwischenfrequenz-Nachbarzelle abzuleiten; oder
ob die Zeitpunkte von SSBs über die bedienende Zelle und die Zwischenfrequenzzellen hinweg ausgerichtet sind.

10. UE nach Anspruch 7, wobei das Verarbeitungsmodul (1001) ferner für Folgendes konfiguriert ist:
wenn eine erste Bedingung erfüllt ist, Bestimmen, dass die Zelle der Zwischenfrequenzmessungen synchron mit der bedienenden Zelle ist;
wobei die erste Bedingung eines oder mehrere aus Folgendem umfasst:
die Frequenz der Zwischenfrequenzmessungen überlagert sich mindestens teilweise mit einer Frequenz der bedienenden Zelle; oder
die Symbole, die gemessen werden sollen, der Zwischenfrequenzmessungen, sind in einem Bandwidth Part (BWP) umfasst, aktiviert durch das UE.

11. UE nach Anspruch 7, wobei das Verarbeitungsmodul (1001) ferner für Folgendes konfiguriert ist:
Senden von zweiten Informationen; wobei die zweiten Informationen angeben, ob das UE eine erste Fähigkeit unterstützt; und die erste Fähigkeit umfasst eines oder mehrere aus Folgendem:
die Zwischenfrequenzmessungen ohne Messspalt; oder
wenn ein Unterträgerabstand einer bedienenden Zelle anders als ein Unterträgerabstand einer Zwischenfrequenz-Nachbarzelle ist, mindestens eines aus Folgendem: Empfangen von Daten von der bedienenden Zelle oder Messen der Nachbarzelle wird durchgeführt.

12. UE nach Anspruch 7, wobei das Verarbeitungsmodul (1001) ferner für Folgendes konfiguriert ist:
Empfangen einer Messkonfiguration, wobei die Messkonfiguration eines oder mehrere aus Folgendem umfasst:
das Messfenster; oder
Informationen, die die Zwischenfrequenzmessungen ohne Messspalt angeben.

13. Computerlesbares Speichermedium, das darauf ein Computerprogramm gespeichert hat, das, wenn es durch einen Prozessor im Zusammenhang mit einem UE ausgeführt wird, verursacht, dass das UE Schritte des Verfahrens zur Übertragung nach einem der Ansprüche 1 bis 6 implementiert.

## Revendications

1. Procédé de transmission, appliqué à un équipement utilisateur (dit EU), comprenant les étapes consistant à :
lorsque l'EU effectue des mesures inter-fréquences sans intervalle de mesure, effectuer (201) au moins l'un des points suivants :
lorsqu'une cellule des mesures inter-fréquences est synchrone avec une cellule de desserte, l'EU n'est pas censé transmettre sur un premier symbole ; ou
lorsque la cellule des mesures inter-fréquences n'est pas synchrone avec la cellule de desserte, l'EU n'est pas censé transmettre au cours d'une fenêtre de mesure ;
ledit premier symbole comprenant un ou plusieurs éléments parmi : des symboles à mesurer, un ou plusieurs symboles antérieurs aux symboles à mesurer, ou un ou plusieurs symboles postérieurs aux symboles à mesurer ;
et **caractérisé par** :
la cellule des mesures inter-fréquences synchrone avec la cellule de desserte représentant un ou plusieurs des points suivants :
une limite de sous-trame entre la cellule de desserte et les cellules voisines inter-fréquences est alignée ;
un numéro de trame système (SFN, System Frame Number) entre la cellule de desserte et les cellules voisines inter-fréquences est aligné ;
l'EU peut exploiter un calage de cellule de desserte pour dériver un indice SSB de cellule voisine inter-fréquence ; ou
les calages des SSB entre la cellule de desserte et les cellules inter-fréquences sont alignés.

2. Procédé selon la revendication 1, dans lequel la cellule des mesures inter-fréquences synchrone avec la cellule de desserte représente en outre que :
une limite de trame entre la cellule de desserte et les cellules voisines inter-fréquences est alignée.

3. Procédé selon la revendication 1, comprenant en outre :
la réception de premières informations ; les premières informations indiquant un ou plusieurs points suivants :
si la limite de sous-trame entre la cellule de desserte et les cellules voisines inter-fréquences est alignée ;
si le SFN entre la cellule de desserte et les cellules voisines inter-fréquences est aligné ;
si la limite de trame entre la cellule de desserte et les cellules voisines inter-fréquences est alignée ;
si l'EU peut exploiter le calage de cellule de desserte pour dériver l'indice SSB de la cellule voisine inter-fréquence ; ou
si les calages des SSB entre la cellule de desserte et les cellules inter-fréquences sont alignés.

4. Procédé selon la revendication 1, comprenant en outre l'étape consistant à :
lorsqu'une première condition est satisfaite, déterminer que la cellule des mesures inter-fréquences est synchrone avec la cellule de desserte ;
ladite première condition comprenant un ou plusieurs des points suivants :
la fréquence des mesures inter-fréquences se superpose au moins partiellement à une fréquence de la cellule de desserte ; ou
les symboles à mesurer des mesures inter-fréquences sont compris dans une partie de bande passante (BWP, Bandwidth Part) activée par l'EU.

5. Procédé selon la revendication 1, comprenant en outre l'étape consistant à :
envoyer des deuxièmes informations ; lesdites deuxièmes informations indiquant si l'EU prend en charge une première capacité ; et ladite première capacité comprenant un ou plusieurs des points suivants :
les mesures inter-fréquences sans intervalle de mesure ; ou
lorsqu'un espacement de sous-porteuse d'une cellule de desserte est différent d'un espacement de sous-porteuse d'une cellule voisine inter-fréquence, au moins l'un des points suivants est effectué : la réception de données en provenance de la cellule de desserte ou le mesurage de la cellule voisine.

6. Procédé selon la revendication 1, comprenant en outre :
la réception d'une configuration de mesure ; ladite configuration de mesure comprenant un ou plusieurs des points suivants :
la fenêtre de mesure ; ou
des informations indiquant les mesures inter-fréquences sans intervalle de mesure.

7. Équipement utilisateur (dit EU), comprenant :
un module de traitement (1001) conçu pour, lorsque l'EU effectue des mesures inter-fréquences sans intervalle de mesure, effectuer au moins l'un des points suivants :
lorsqu'une cellule des mesures inter-fréquences est synchrone avec une cellule de desserte, l'EU n'est pas censé transmettre sur un premier symbole ; ou
lorsque la cellule des mesures inter-fréquences n'est pas synchrone avec la cellule de desserte, l'EU n'est pas censé transmettre au cours d'une fenêtre de mesure ;
ledit premier symbole comprenant un ou plusieurs éléments parmi : des symboles à mesurer, un ou plusieurs symboles antérieurs aux symboles à mesurer, ou un ou plusieurs symboles postérieurs aux symboles à mesurer ;
et **caractérisé par** :
la cellule des mesures inter-fréquences synchrone avec la cellule de desserte représentant un ou plusieurs des points suivants :
une limite de sous-trame entre la cellule de desserte et les cellules voisines inter-fréquences est alignée ;
un numéro de trame système (SFN, System Frame Number) entre la cellule de desserte et les cellules voisines inter-fréquences est aligné ;
l'EU peut exploiter un calage de cellule de desserte pour dériver un indice SSB de cellule voisine inter-fréquence ; ou
les calages des SSB entre la cellule de desserte et les cellules inter-fréquences sont alignés.

8. EU selon la revendication 7, dans lequel la cellule des mesures inter-fréquences est synchrone avec la cellule de desserte représente en outre que :
une limite de trame entre la cellule de desserte et les cellules voisines inter-fréquences est alignée.

9. EU selon la revendication 7, dans lequel le module de traitement (1001) est en outre conçu pour :
recevoir des premières informations ; lesdites premières informations indiquant un ou plusieurs points suivants :
si la limite de sous-trame entre la cellule de desserte et les cellules voisines inter-fréquences est alignée ;
si le SFN entre la cellule de desserte et les cellules voisines inter-fréquences est aligné ;
si la limite de trame entre la cellule de desserte et les cellules voisines inter-fréquences est alignée ;
si l'EU peut exploiter le calage de cellule de desserte pour dériver l'indice SSB de la cellule voisine inter-fréquence ; ou
si les calages des SSB entre la cellule de desserte et les cellules inter-fréquences sont alignés.

10. EU selon la revendication 7, dans lequel le module de traitement (1001) est en outre conçu pour :
lorsqu'une première condition est satisfaite, déterminer que la cellule des mesures inter-fréquences est synchrone avec la cellule de desserte ;
ladite première condition comprenant un ou plusieurs des points suivants :
la fréquence des mesures inter-fréquences se superpose au moins partiellement à une fréquence de la cellule de desserte ; ou
les symboles à mesurer des mesures inter-fréquences sont compris dans une partie de bande passante (BWP, Bandwidth Part) activée par l'EU.

11. EU selon la revendication 7, dans lequel le module de traitement (1001) est en outre conçu pour :
envoyer des deuxièmes informations ; lesdites deuxièmes informations indiquant si l'EU prend en charge une première capacité ; et ladite première capacité comprenant un ou plusieurs des points suivants :
les mesures inter-fréquences sans intervalle de mesure ; ou
lorsqu'un espacement de sous-porteuse d'une cellule de desserte est différent d'un espacement de sous-porteuse d'une cellule voisine inter-fréquence, au moins l'un des points suivants est effectué : la réception de données provenant de la cellule de desserte ou le mesurage de la cellule voisine.

12. EU selon la revendication 7, dans lequel le module de traitement (1001) est en outre conçu pour :
recevoir une configuration de mesure ; ladite configuration de mesure comprenant un ou plusieurs des points suivants :
la fenêtre de mesure ; ou
des informations indiquant les mesures inter-fréquences sans intervalle de mesure.

13. Support de stockage lisible par ordinateur sur lequel est stocké un programme informatique qui, lorsqu'il est exécuté par un processeur associé à un EU, amène l'EU à mettre en œuvre les étapes du procédé de transmission selon l'une quelconque des revendications 1 à 6.
